# Europäisches Patentamt

# European Patent Office

# Office européen des brevets

(19)

(11) Veröffentlichungsnummer: **0 305 520**
**A1**

(12)

# EUROPÄISCHE PATENTANMELDUNG

Veröffentlicht nach Art. 158 Abs. 3 EPÜ

(21) Anmeldenummer: 87902867.8

(22) Anmeldetag: 29.01.87

Daten der zugrundeliegenden internationalen Anmeldung:

(86) Internationale Anmeldenummer:
PCT/SU87/00014

(87) Internationale Veröffentlichungsnummer:
WO88/00005 (14.01.88 88/02)

(51) Int. Cl.³: **A 01 G 9/00**

(30) Priorität: 04.07.86 SU 4086852

(43) Veröffentlichungstag der Anmeldung:
08.03.89 Patentblatt 89/10

(84) Benannte Vertragsstaaten:
AT BE CH DE FR GB IT LI NL SE

(71) Anmelder: NAUCHNO-PROIZVODSTVENNOE
OBIEDINENIE PO SELSKOKHOZYAISTVENNOMU
MASHINOSTROENIJU NPO VISKHOM
Dmitrovskoe shosse, 107
Moscow, 127247(SU)

(72) Erfinder: LIPOV, Jury Noievich
ul. Vavilova, 56-2-167
Moscow, 117296(SU)

(72) Erfinder: KHROMOV, Alexandr Viktorovich
ul. Dubninskaya, 63-3-31
Moscow, 127247(SU)

(72) Erfinder: VINOGRADOV, Anatoly Sergeevich
ul. Sofii Kovalevskoi, 2-4-231
Moscow, 127247(SU)

(72) Erfinder: PROZOROVSKAYA, Natalya Ivanovna
ul. Dubninskaya, 63-5-9
Moscow, 127247(SU)

(74) Vertreter: Patentanwälte Zellentin & Partner
Zweibrückenstrasse 15
D-8000 München 2(DE)

(54) **KOMPOSTIERMASCHINE.**

(57) Die angemeldete Kombine besitzt an ihrem Körper (1) in dessen oberem Teil einen für Gips bestimmten Bunker (10) mit einem Austragsfenster (11), das unmittelbar über einer Zone (A) des im Schwebezustand befindlichen Bearbeitungsmaterials angeordnet ist. Dieses Fenster (11) steht mit der Zone (A) über eine im Kombinekörper (1) ausgeführte Öffnung (13) in Verbindung.

KOMBINE ZUR KOMPOSTBEREITUNG

## Technisches Gebiet

Die Erfindung bezieht sich auf den Landmaschinenbau, insbesondere auf eine Kombine zur Kompostbereitung für die Champignonproduktion.

## Stand der Technik

Der Prozeß der Kompostbereitung ist am arbeitsintensivsten und macht 40% des gesamten für die Champignonproduktion erforderlichen Arbeitsaufwandes aus.

Zur Zeit wird zur Durchführung sämtlicher Operationen bei der Kompostbereitung ein Maschinenkomplex eingesetzt, der aus einer Maschine zur Formierung der ersten Kompostmiete, einer Maschine zur Umsetzung der ersten Kompostmiete und einer Maschine zur Einbringung von Gips auf die Kompostmietenoberfläche besteht.

Ein derart komplizierter Aufbau des genannten Maschinenkomplexes ist dadurch bedingt, daß jede dieser Maschinen zur Durchführung einer einzigen, nur von ihr realisierbaren Operation bestimmt ist. Insgesamt ist der genannte Maschinenkomplex platzraubend und besitzt einen hohen Metallbedarf, wobei für den Betrieb desselben ein erheblicher Arbeits- und Energieaufwand erforderlich ist.

Bekannt ist eine Maschine zum Einbringen von Gips auf die Kompostmietenoberfläche, die einen Portalrahmen enthält, auf dem ein Verbrennungsmotor und ein für Gips bestimmter Bunker mit beweglichem Boden montiert sind.

Die Arbeit der Maschine geht in folgender Weise vor sich. Vor dem Arbeitsbeginn wird mit Hilfe eines Frontladers Gips in den Bunker eingetragen. Die beschickte Maschine fährt an den Mietenanfang heran. Beim Weiterfahren der Maschine kommt die Miete unter den Portalrahmen, und die Oberfläche derselben wird mit einer Gipsschicht vorgegebener Dicke bestreut.

Ein Nachteil der bekannten Maschine liegt darin, daß sie den Gips nur auf die Kompostmietenoberfläche bringt, wo der Gips rasch zu einer feuchten klumpenartigen Masse zusammenbackt, was bei weiteren Mietenumsetzungen die Vermischung und eine gleichmäßige Verteilung des Gipses in der gesamten Kompostmasse erschwert und demnach eine ungenügende Qualität des zubereiteten Kompostes bedingt.

Darüber hinaus führt die genannte Maschine nur eine einzige Operation, nämlich die Gipseinbringung, aus, so daß die Pro-Woche-Auslastung derselben unter Bedingungen eines 1 ha großen Champignon-Kulturhauses äußerst gering ist. Also ist die bekannte Maschine im Produktionsprozeß unrentabel.

Dem Anmeldungsgegenstand am nächsten kommt nach ihrem technischen Wesen und dem erzielbaren Resultat eine Maschine zur Kompostbereitung für die Champignonproduktion (SU, A, 895351), die einen Maschinenkörper besitzt, an dem ein Speicher für die Ausgangskomponenten mit einem Schrägförderer und einer Abweistrommel sowie eine Einheit zur aktiven Komponentenbearbeitung angebracht sind, die in Gestalt einer Mitnahmezinkentrommel und eines Streu- bzw. Häckseltrommelsystems (nachfolgend Beater genannt) zur Zuführung des zu vermischenden Materials zu einer Formungskammer ausgeführt ist, wobei der Tragrahmen der Maschine aus zwei miteinander mittels einer Kopplungsvorrichtung verkoppelten Teilen besteht.

Die Arbeit der beschriebenen Maschine geht auf die folgende Weise vor sich. Beim Durchführen der vorgesehenen technologischen Operation der Mietenformierung aus dem einzumietenden Ausgangsmaterial werden die Ausgangskomponenten mit Hilfe eines frontalen Gabelladers in den Speicher eingefüllt. Der Schrägförderer des Speichers führt die Ausgangskomponenten (vorher eingeweichtes Stroh und Geflügelkot) der Mitnahmezinkentrommel zu. Die zugeführte Schicht der vom Schrägförderer ablaufenden Ausgangskomponenten wird durch die Abweistrommel geregelt. Die überschüssigen Ausgangskomponenten werden dabei von dieser Abweistrommel in den unteren Speicherteil zurückgeschleudert. Die Mitnahmezinkentrommel erfaßt die zugeführte Masse und schleudert sie auf das Beatersystem, wobei bereits in diesem Stadium die Masse teilweise vermischt, geschüttelt und mit Sauerstoff angereichert wird. Das Beatersystem zerkleinert die Masse auf die erforderliche Teilchengröße, schüttelt sie noch einmal durch, vermischt sie mit einer höheren Intensität, reichert sie dank

- 3 -                                        0305520

dem durch die Rotation der Arbeitsorgane entstehenden Luftstrom) mit Sauerstoff an und schleudert sie schließlich in
die Formungskammer hinein, wo eine Miete erforderlicher Ausmaße ausgeformt wird.

Beim Durchführen der technologischen Operation der Kompostmietenumsetzung wird der Speicher vom Hauptrahmen der
Maschine gelöst. Die Maschine fährt an die Kompostmietenstirnseite bis zur Berührung derselben mit den Trommelzinken heran. Der Antrieb wird eingeschaltet, und die Mitnahmezinkentrommel erfaßt aus der Miete eine Kompostmenge und
führt sie dem Beatersystem zu. Die Kompostteilchen gelangen
also auf das Beatersystem, von wo sie in die Formungskammer
weiterfliegen, wo sie erneut zu einer Miete rechteckigen
Querschnitts zusammengefügt werden.

Ein Nachteil der beschriebenen Maschine besteht in
einer niedrigen Qualität des zubereiteten Kompostes. Dies ist
dadurch erklärbar,      daß der Gips von einem separaten metallaufwendigen Energiemittel auf die Oberfläche der (vorbeschriebenen) Kompostmiete vor der Umsetzung derselben aufgebracht wird. Es ist besonders zu unterstreichen, daß
Gips einen Neutralisator für das Medium der Kompostmasse
darstellt. Je gleichmäßiger er in der Kompostmasse verteilt
ist, umso gleichmäßiger ist der Säuregehalt des Kompostes
und umso höher ist demnach seine Qualität. Mit der beschriebenen Maschine ist das erwartete Resultat nicht zu erzielen,
weil der Gips auf die Kompostmietenoberfläche aufgebracht
wird und in der Kompostmasse nicht gleichmäßig verteilt wer-
den kann.

Offenbarung der Erfindung

Ziel der vorliegenden Erfindung ist die Beseitigung
der vorgenannten Nachteile.

Der Erfindung liegt die Aufgabe zugrunde, eine Kombine
zur Kompostbereitung mit einer solchen konstruktiven Ausführung zu schaffen, die die Zusammenlegung sämtlicher für die
Kompostbereitung erforderlichen Operationen, die Erweiterung ihrer technologischen Möglichkeiten und die Verbesserung der Kom-
postbereitungsgüte dank einer gleichmäßigeren Gipsvertei-
lung in der gesamten Kompostmasse gewährleistet.

Die gestellte Aufgabe ist dadurch gelöst, daß in einer Kombine zur Kompostbereitung, die einen Kombinekörper besitzt, an dem ein Speicher für die Ausgangskomponenten mit einem Schrägförderer und einer Abweistrommel sowie eine Einheit zur aktiven Komponentenbearbeitung angebracht sind, die in Gestalt einer Mitnahmezinkentrommel und eines Beatersystems für die Zuführung des zu vermischenden Materials zu einer Formungskammer ausgeführt ist, erfindungsgemäß am Kombinekörper in dessen oberem Teil ein für Gips bestimmter Bunker montiert ist, der ein Austragsfenster aufweist, welches unmittelbar über der Zone des im Schwebezustand befindlichen Bearbeitungsmaterials angeordnet ist und mit ihr über eine im Kombinekörper vorgesehene Öffnung in Verbindung steht.

Ferner ist der Boden des für Gips bestimmten Bunkers vorzugsweise beweglich ausgeführt und dessen Fenster mit einem Schieber ausgestattet.

Zur Vermeidung der Verstopfung der im Kombinekörper ausgeführten Öffnung durch Kompostteilchen kann am Kombinekörper eine Schutzverkleidung montiert sein, deren Fläche zweckmäßigerweise nach unten in der Drehrichtung der Mitnahmezinkentrommel zeigen soll.

Diese konstruktive Ausführung der Kombine gewährleistet eine vollständige Zusammenlegung aller für die Kompostzubereitung erforderlichen Operationen und verbessert die Kompostqualität unter gleichzeitiger Senkung des Energieaufwandes.

Das Prinzip der vorliegenden Erfindung besteht darin, daß in die Konstruktion der Kombine zur Kompostbereitung neben vorhandenen Arbeitsorganen und Einrichtungen zusätzlich ein für Gips bestimmter Bunker eingeführt ist. Dies gestattet es, gleichzeitig mit der Umsetzung der ersten Kompostmiete den Gips in die Zone des im Schwebezustand befindlichen Bearbeitungsmaterials einzutragen und dadurch die Kompostmasse in der gesamten Breite und Tiefe der umzusetzenden Miete gleichmäßig mit Gips zu sättigen. Die Anbringung des für Gips bestimmten Bunkers am Kombinekörper ermöglicht es, den Gips in die vorerwähnte Zone dadurch einzubringen, daß das Austragsfenster des Bunkers mit der im Kombinekörper vor-

0305520

gesehenen Öffnung in Übereinstimmung gebracht ist.

Der bewegliche Bunkerboden erlaubt es, den Gips über das Austragsfenster zuzuführen, während der vorhandene Schieber die Gipszuführung regelt.

Die Schutzverkleidung dient zur Vermeidung der Verstopfung der im Kombinekörper vorgesehenen Öffnung dadurch, daß ihre Fläche nach unten in der Drehrichtung der Mitnahmetrommel zeigt. Außerdem dient die Schutzverkleidungsfläche als Führung zum Auslauf des Gipses in die Zone des im Schwebezustand befindlichen Bearbeitungsmaterials.

Die Zusammenlegung sämtlicher für die Kompostbereitung erforderlichen Operationen in einer Kombine gewährleistet eine Verringerung des Metallaufwandes für die Herstellung solcher Maschinen um den Faktor 2,5 sowie eine Reduzierung des Energieaufwandes um den Faktor 1,5.

Die verbesserte Qualität des zubereiteten Kompostes infolge einer gleichmäßigeren Gipsverteilung in demselben trägt zur Erhöhung von Pilzerträgen bis zu 2 kg je 1 m$^2$ pro Jahr bei.

## Beschreibung

Nachstehend ist ein konkretes Ausführungsbeispiel der Erfindung angeführt, das durch eine Zeichnung veranschaulicht wird, die die Gesamtansicht der erfindungsgemäßen Kombine zur Kompostbereitung schematisch darstellt.

## Ausführungsform der Erfindung

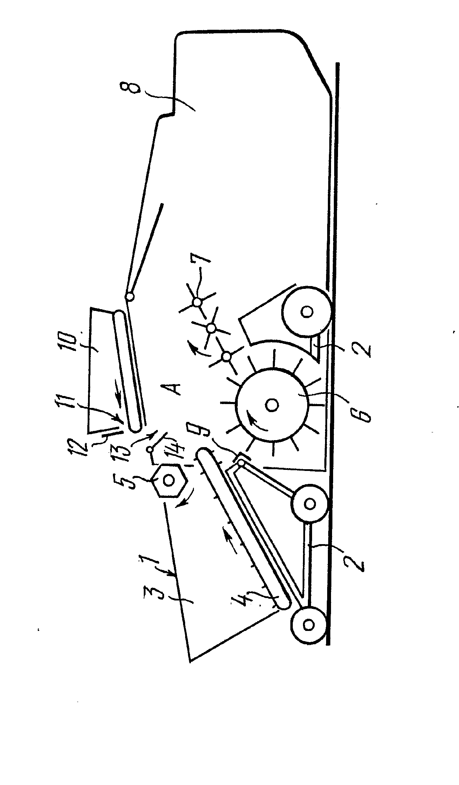

Die zur Kompostbereitung in der Champignonproduktion bestimmte Kombine enthält einen Kombinekörper 1, an dem ein aus zwei Teilen bestehender geschweißter Rahmen 2 (Fig. 1) befestigt ist. Der eine Teil trägt einen Speicher 3 für die Ausgangskomponenten mit einem Schägzubringerförderer 4 und einer Abweistrommel 5. Der andere Teil des Rahmens 2 trägt eine Einheit zur aktiven Komponentenbearbeitung, die in Gestalt einer Mitnahmezinkentrommel 6 und eines Systems von Beatern 7 ausgeführt ist, die aufeinanderfolgend angebracht sind und für die Zuführung des zu vermischenden Materials zu einer Formungskammer 8 sorgen.

0305520

Die beiden Teile des Rahmens 2 sind mit Hilfe einer Vorrichtung 9 miteinander verkoppelt, die auf eine beliebige bekannte Weise ausgeführt sein kann.

Am Kombinekörper 1 ist in dessen oberem Teil ein für Gips bestimmter Bunker 10 montiert, der ein Austragsfenster 11 aufweist, das unmittelbar über der Zone A des im Schwebezustand befindlichen Bearbeitungsmaterials angeordnet ist. Das Austragsfenster 11 des Bunkers 10 ist mit einem Schieber 12 ausgestattet. Der Boden des Bunkers 10 ist beweglich ausgebildet. Im Kombinekörper 1 ist eine Öffnung 13 ausgeführt, die eine Schutzverkleidung 14 besitzt, deren Fläche nach unten in der Drehrichtung der Mitnahmezinkentrommel 6 zeigt.

Die Kombine arbeitet folgenderweise.

Beim Durchführen der technologischen Operation der Mietenformung aus dem einzumietenden Ausgangsmaterial werden in den Speicher 3 mit Hilfe eines Gabelladers die Ausgangskomponenten eingefüllt. Der Schrägförderer 4 des Speichers 3 führt die Ausgangskomponenten (vorher eingeweichtes Stroh und Geflügelkot) der Mitnahmezinkentrommel 6 zu. Die zugeführte Schichtstärke wird durch die Abweistrommel 5 geregelt, wobei der übriggebliebene Teil der Masse in den unteren Speicherteil zurückgeschleudert wird. Die Mitnahmezinkentrommel 6 erfaßt die zugeführte Masse und schleudert sie auf das Beatersystem 7, wobei bereits in diesem Stadium die Masse teilweise vermischt, geschüttelt und mit Sauerstoff angereichert wird. Die Beater zerkleinern die Masse auf die erforderliche Teilchengröße, schütteln sie noch einmal durch, vermischen sie mit einer höheren Intensität und reichern sie (dank dem infolge der Drehbewegung entstehenden Luftstrom) mit Sauerstoff an, worauf sie die Masse in die Formungskammer 8 hineinschleudern, wo eine Miete erforderlichen Ausmaßes ausgeformt wird. Der Bunker 10, der zum Einbringen von Gips dient, steht bei der Ausführung dieser Operation außer Funktion.

Beim Durchführen der technologischen Operation der ersten Kompostmietenumsetzung wird der eine der Teile des Rahmens 2, an dem der Speicher 3 mit dem Schrägförderer 4 und der Abweistrommel 5 montiert sind, von dem anderen Teil dieses Rahmens 2 abgetrennt. Die Kombine erfaßt, indem sie mit ihrer Mitnahmezinkentrommel 6 gegen die Miete anfährt, eine Kompostmenge aus derselben und übergibt sie auf das System von Beatern 7. Hierbei verschiebt der bewegliche Boden des Bunkers 10 den (von einem traktorgezogenen Eimerauflader in den Bunker eingefüllten) Gips über das Austragsfenster 11 in Form einer jeweils erforderlichen, mittels des Schiebers 12 geregelten Schicht an die im Kombinekörper 1 ausgeführte Öffnung 13. Das Austragsfenster 11 des für Gips bestimmten Bunkers 10 liegt über der im Kombinekörper 1 ausgeführten Öffnung 13 in einer solchen Weise, daß der Gips in die Zone A der im Schwebezustand befindlichen Kompostteilchen gelangt, die von den Zinken der Trommel 6 abgeglitten sind. Die von den Trommelzinken abgleitenden Kompostteilchen werden in der gesamten Arbeitsbreite der Kombine gleichmäßig mit Gipsstaub umhüllt, wodurch eine gleichmäßige Sättigung der gesamten Kompostschichttiefe mit Gips erfolgt. Daraufhin gelangen die Kompostteilchen auf das Beatersystem, wonach der technologische Prozeß genauso wie beim Formieren der ersten Kompostmiete abläuft, wobei die gesamte Kompostmasse gleichmäßig mit Gips gesättigt wird.

Die nachfolgenden Operationen der Kompostmietenumsetzung geschehen ähnlich der ersten Umsetzung, der Unterschied besteht lediglich darin, daß die Einrichtung zum Gipseinbringen außer Funktion steht.

Die Anwendung der vorliegenden Erfindung bietet die Möglichkeit, den Gips sofort bei der ersten Kompostmietenumsetzung einzubringen, wobei die Zusammenlegung sämtlicher notwendiger Operationen die Zahl dieser Umsetzungen von vier auf drei reduziert.

Gewerbliche Verwertbarkeit

Die vorliegende Erfindung kann in verschiedenen Landwirtschaftszweigen, die sich mit dem Anbau von landwirtschaftlichen Kulturen auf künstlich zubereiteten Bodensubstraten befassen, sowie beim Pilzanbau auf Flächen unter Glas effektiv angewendet werden.

- 8 -

PATENTANSPRÜCHE

1. Kombine zur Kompostbereitung, die einen Kombinekörper (1) besitzt, an dem ein Speicher (3) für die Ausgangskomponenten mit einem Schrägförderer (4) und einer Abweistrommel (5) sowie eine Einheit zur aktiven Komponentenbearbeitung angebracht sind, die in Gestalt einer Mitnahmezinkentrommel (6) und eines Streu- bzw. Häckseltrommelsystems (7) für die Zuführung des zu vermischenden Materials zur Formungskammer (8) ausgeführt ist, dadurch g e k e n n z e i c h n e t, daß am Kombinekörper (1) in dessen oberem Teil ein für Gips bestimmter Bunker (10) montiert ist, der ein Austragsfenster (11) aufweist, das unmittelbar über einer Zone (A) des im Schwebezustand befindlichen Bearbeitungsmaterials angeordnet ist und über eine im Kombinekörper (1) ausgeführte Öffnung (13) mit ihr in Verbindung steht.

2. Kombine nach Anspruch 1, dadurch g e k e n n z e i c h n e t, daß der Boden des Bunkers (10) beweglich ausgeführt und sein Austragsfenster (11) mit einem Schieber (12) ausgestattet ist.

3. Kombine nach Anspruch 1 oder 2, dadurch g e k e n n z e i c h n e t, daß am Kombinekörper (1) eine Schutzverkleidung (14) für die Öffnung (13) montiert ist, deren Fläche nach unten in der Drehrichtung der Mitnahmezinkentrommel (6) zeigt.

International Application No PCT/SU 87/00014

## I. CLASSIFICATION OF SUBJECT MATTER (If several classification symbols apply, indicate all)

According to International Patent Classification (IPC) or to both National Classification and IPC

IPC$^4$: A 01 G 9/00

## II. FIELDS SEARCHED

### Minimum Documentation Searched

| Classification System | Classification Symbols |
|---|---|
| IPC$^4$: | A01G 9/00, A01C 15/00 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | A.V. Goloulin "Novye mashiny dly mekhaniza-tsii ovoschevodstva v zaschischennom grunte", 1979, Visshaya shkola (Moscow see page 45, fig. 13 | 1 |
| A | SU, A1, 1135446, (Zaporozhsky nauchno-issledovatelsky konstruktorsko-tekhnologichesky institut po mashinam dlya podgotovki vneseniya v pochva mineralnykh udobreny), 23 January 1985 (23.01.85), see fig. 1 | 1 |
| A | SU, A1, 882479, (Vsesojuzny ordena Trudovogo Krasnogo Znameni nauchno-issledovatelsky institut selskokhozyaistvennogo mashinostroenia im. V.P. Goryachkina), 23 November 1981 (23.11.81), see the claims, the drawing | 1 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 May 1987 (27.05.87) | 3 July 1987 (03.07.87) |

| International Searching Authority | Signature of Authorized Officer |
|---|---|
| ISA/SU | |

Form PCT/ISA/210 (second sheet) (January 1985)